# EUROPÄISCHE PATENTSCHRIFT

(11) **EP 0 744 121 B1**
(45) Veröffentlichungstag und Bekanntmachung des Hinweises auf die Patenterteilung: **21.01.1998**
(21) Anmeldenummer: 96107246.9
(22) Anmeldetag: 08.05.1996
(51) Int. Cl.: A01G 9/14

(54) **Gewächshaus**
Greenhouse
Serre

(30) Priorität: 23.05.1995 DE 19518616
(43) Veröffentlichungstag der Anmeldung: 27.11.1996
(73) Patentinhaber: EKONAL Bausysteme GmbH Co. KG, 42553 Velbert (DE)
(72) Erfinder: Erstling, Erich, 45549 Sprockhövel (DE)
(74) Vertreter: Mentzel, Norbert, Dipl.-Phys.

(56) Entgegenhaltungen:
- EP-A- 0 139 777
- DE-U- 8 619 569
- DE-U- 9 420 809
- US-A- 4 658 559

## Beschreibung

Die Erfindung betrifft ein Gewächshaus aus von Profilstäben aus Metall, insbesondere aus Aluminium und/oder dessen Legierungen gebildeten Stützen, Riegeln, Pfetten und Sprossen zusammengesetzten Rahmenteilen, in die unter Zwischenschaltung von Dichtungen Füllungsplatten aus Isolierglasscheiben, durchsichtigen Kunststoff-Doppelplatten od. dgl. eingesetzt sind, in deren Stoßzwischenraum Profilstege einragen, die einerseits Bestandteile von Sprossen und andererseits Bestandteil von an den Pfetten festgelegten Stützprofilen sind, wobei die Firstpfette ein Scharnierrahmenprofil der Lüftungsklappe schwenkbeweglich haltert und die Lüftungsklappe ein Lüftungsrandprofil aufweist, das mit den Sprossen der Lüftungsklappe verbunden ist, während an der unteren Dachkante die Sprossen mit einem Rinnenrandprofil verbunden sind.

Bei einem aus dem deutschen Gebrauchsmuster G 86 19 569.7 bekannten Gewächshaus sind in die Rahmenteile unter Zwischenschaltung von Dichtungen bereits Isolierglasscheiben eingesetzt, so daß bereits eine gewisse Wärmedämmung erzielt werden konnte. Allerdings fehlt dieser Lösung die erforderliche Konsequenz um zu verhindern, daß Wärmebrücken im Bereich der Profilstäbe vorhanden sind, wobei als neuralgische Punkte insbesondere der Firstbereich, der Stoßbereich zwischen den einzelnen aus beispielsweise Isolierglasscheiben gebildeten Füllungsplatten sowie der Anschlußbereich an Wasserablaufrinnen und Fundamente sowie schließlich auch der Öffnungsrand von Lüftungsklappen anzusehen sind.

Aufgabe der Erfindung ist es, ein Gewächshaus der eingangs genannten Art dahingehend zu verbessern, daß neben dem Einsatz von isolierenden Füllungsplatten insbesondere auch Wärmebrücken im Bereich von Anschlußstellen und Randbereichen wirksam unterbrochen sind.

Diese Aufgabe ist erfindungsgemäß dadurch gelöst, daß die Profilstege sowohl der Sprossen als auch der Stützprofile Schraubnuten zur Festlegung einer dichtenden Abdeckleiste und/oder eines Isolierkörpers aufweisen, und daß die Firstpfette von einer an den Scharnierrahmenprofilen der Lüftungsklappen festgelegten, Isolierkammern aufweisenden, flexiblen Abdeckhaube übergriffen ist und daß am Lüftungsrandprofil und am Rinnenrandprofil ein Isolierkammern aufweisendes Glashalteprofil - den Randbereich der Füllungsplatte umfaßend - festgelegt ist. Dabei sind die Isolierkörper, die Abdeckhauben und die Glashalteprofile vorteilhaft aus einem wärmedämmenden Kunststoff gebildet, und weisen bedarfsweise unterteilte Isolierkammern auf, in denen Luftzwischenräume für eine ausreichende Wärmedämmung sorgen.

Zur Unterbrechnung der Wärmebrücken im Stoßbereich der an Sprossen und Pfetten gehalterten Füllungsplatten sind in die Schraubnut der Profilstege von Sprossen und Stützprofilen Isolierkörper eingesetzt, die zusammen mit daran verrasteten, elastisch dichtenden, gegebenenfalls Doppelzungen aufweisenden Abdeckleisten mittels abstandsweise in die Schraubnuten eingedrehten Schrauben festgelegt sind. Obschon es denkbar ist allein die Abdeckleisten als äußeres Bauteil einzusetzen, so mag es doch aus Gründen einer sicheren Andrückung der Dichtlippen bzw. der Doppelzungen der Abdeckleisten und zur Erhöhung der Alterungsbeständigkeit vorteilhaft sein, wenn die Abdeckleiste von einem metallischen Abdeckprofil übergriffen und zusammen mit dem Isolierkörper und der Abdeckleiste mittels den Schrauben am Profilsteg von Sprossen und Stützprofilen festgelegt sind.

Die Unterbrechnung der Wärmebrücke im Firstbereich ist von besonderer Bedeutung, weil die aufsteigende Warmluft diesen Bereich besonders erwärmt. Zur Unterbrechnung der Wärmebrücke ist die die Firstpfette übergreifende Abdeckhaube doppelschalig mit mehreren dazwischen angeordneten Hohlkammern ausgebildet und ist an ihren Seitenrändern mit je einer Raste in einer Nut jedes Scharnierrahmenprofiles festgelegt. Damit bleibt die gesamte Firstpfette zusammen mit den daran angelenkten Scharnierrahmenprofilen im Warmbereich. Zu diesem Zweck weisen die Seitenränder der Abdeckhaube vorteilhaft an ihrem oberen Bereich eine die Sprossen überlappende Dichtlamelle auf, während die Seitenränder an ihrem unteren Bereich mit wenigstens einer Dichtlippe die Füllungsplatten im Verhältnis zum Scharnierrahmenprofil abdichten.

Um auch den unteren Randbereich der Lüftungsklappen und des Glasdaches selbst zu isolieren, sind die Glashalteprofile vorteilhaft als Hohlkammerprofile mit einem am Stirnrand der Füllungsplatten gegebenenfalls über eine Zwischenlage abgestützten Anlageschenkel und einem am Lüftungsrandprofil bzw. am Rinnenrandprofil aufliegenden, rechtwinklig zum Anlageschenkel abragenden Stützschenkel ausgebildet, wobei der Stützschenkel sich in einem Klemmschenkel fortsetzt, der mit einer Halteklaue in eine Stütznut des Lüftungsrandprofiles bzw. des Rinnenrandprofiles eingreift und mit einem Halteschenkel unter Zwischenschaltung eines Dichtbandes die Füllungsplatte im Randbereich oberseitig übergreift. Bei geschlossener Lüftungsklappe ist zur Vermeidung von Wärmeübergängen der Luftspalt zwischen dem Lüftungsrandprofil und dem darunterliegenden Lüftungsriegel des Dachrahmens durch eine am Lüftungsriegel gehalterte Pfettendichtleiste in Schließlage der Lüftungsklappe durch Anlage am Glashalteprofil einerseits und an der darunterliegenden Füllungsplatte andererseits überbrückt. Dabei kann diese Pfettendichtleiste vorteilhaft als Hohlkammerprofil ausgebildet sein, das außerdem mehrere hintereinanderliegende Dichtlippen aufweist, um isolierende Luftzwischenräume zu bilden.

Eine Isolierung des Stoßzwischenraumes der Füllungsplatten im Bereich der Pfetten läßt sich vorteilhaft dadurch erzielen, daß an den in den Stoßzwischenraum zweier Füllungsplatten einragenden Profilstegen der an den Pfetten gehalterten Stützprofile als Isolierkörper wirkende Scheibenstoßdichtungen gehaltert sind, die mit einer Spreizleiste in der Schraubnut verrasten und mit beiderseitigen Dichtschenkeln gegen die Stirnränder der Füllungsplatten gerichtet sind, während beiderseits abragende Dichtlamellen den Randbereich der Füllungsplatten übergreifen und mittels eines durch eine in die Schraubnut eingedrehte Schraube beaufschlagten Abdeckprofiles gegen die Außenebene der Füllungsplatten angedrückt sind. Auch bei dieser Scheibenstoßdichtung wird eine isolierende Wirkung durch entstehende Luftzwischenräume erzielt.

Auch die Wärmebrücke im Bereich des Rinnenrandes läßt sich unterbrechen, indem das Rinnenrandprofil als Verbundprofil ausgebildet ist, dessen eine an den Sprossen festgelegte, metallische Profilleiste mit der das Glashalteprofil halternden und den Rinnenrand aufnehmenden, metallischen Profilleiste über einen Isoliersteg miteinander verbunden sind. Alternativ dazu läßt sich jedoch auch das Rinnenrandprofil als einstückige Metalleiste ausbilden, an die dann eine Metallrinne mit einer wärmedämmenden, an das Glashalteprofil anschließenden Auskleidung angeschlossen ist. Im letzteren Fall bildet das Glashalteprofil und die Auskleidung der Rinne aus wärmedämmendem Werkstoff eine Überdeckung des Rinnenrandprofiles, das demzufolge vollkommen im Warmbereich verbleibt.

Die Erfindung ist in einem Ausführungsbeispiel auf der Zeichnung dargestellt und wird nachfolgend näher erläutert. Es zeigen:
- Fig. 1: den Aufbau einer Gewächshaus-Außenhaut in schematischer Darstellung,
- Fig. 2: eine Seite des Gewächshausdaches in einem Querschnitt nach der Linie II - II von Fig. 1,
- Fig. 3: den Querschnitt einer die Füllungsplatten in ihrem Stoßbereich halternden Sprosse gemäß dem Schnitt nach der Linie III - III von Fig. 1,
- Fig. 4: den mit IV in Fig. 2 gekennzeichneten Firstbereich in einer gegenüber Fig. 2 vergrößerten Schnittdarstellung,
- Fig. 5: den in Fig. 2 mit V gekennzeichneten unteren Randbereich der Lüftungsklappe in einer gegenüber Fig. 2 vergrößerten Schnittdarstellung,
- Fig. 6: den in Fig. 2 mit VI gekennzeichneten Pfettenbereich in einer gegenüber Fig. 2 vergrößerten Schnittdarstellung,
- Fig. 7: den mit VII in Fig. 2 gekennzeichneten unteren Dachrandbereich in einer gegenüber Fig. 2 vergrößerten Schnittdarstellung,
- Fig. 7A: den analog Fig. 7 dargestellten unteren Dachrandbereich in einer alternativen Ausführungsform.

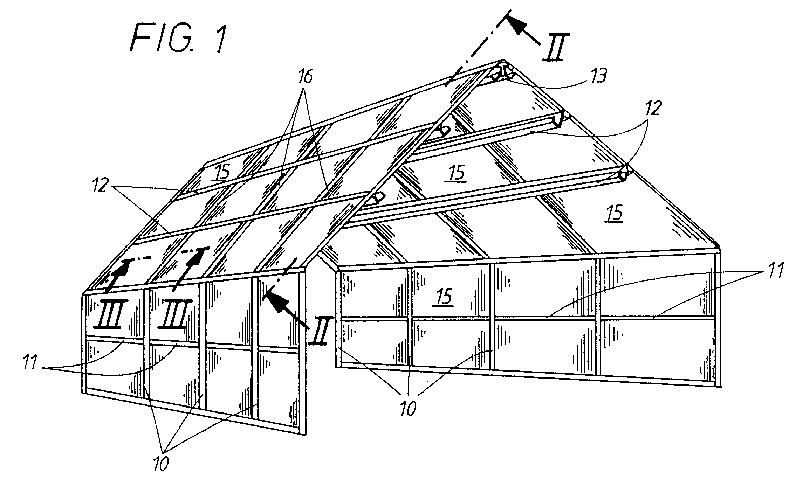

Bei dem aus Fig. 1 ersichtlichen Gewächshaus sind aus Gründen der Übersichtlichkeit das beispielsweise aus stählernen Doppel-T-Profilen bestehende innenseitige Traggerüst und die Giebelseiten nicht dargestellt. Bei dem Gewächshaus bestehen die senkrecht angeordneten Rahmenteile im wesentlichen aus vertikal verlaufenden Stützen 10 und horizontal angeordneten Riegeln 11. Im Dachbereich des Gewächshauses bestehen die Rahmenteile im wesentlichen aus in Längsrichtung des Gewächshauses verlaufenden Pfetten 12 und einer Firstpfette 13 während in Richtung der Dachneigung Sprossen 16 verlaufen. Diese vorgenannten, die Rahmenteile bildenden Bauteile bestehen aus von Aluminium und seinen Legierungen gebildeten Strangpreßprofilen, die - wie oben erwähnt - zu rechteckförmigen Rahmenteilen miteinander verbunden sind, in welche Füllungsplatten 15 eingesetzt sind. Diese Füllungsplatten bestehen in der Regel aus Isolierglasscheiben, die je nach Wärmedämmgrad eine unterschiedliche Stärke aufweisen können. Allerdings ist es auch möglich, statt Isolierglasscheiben Kunststoff-Doppelplatten zu verwenden.

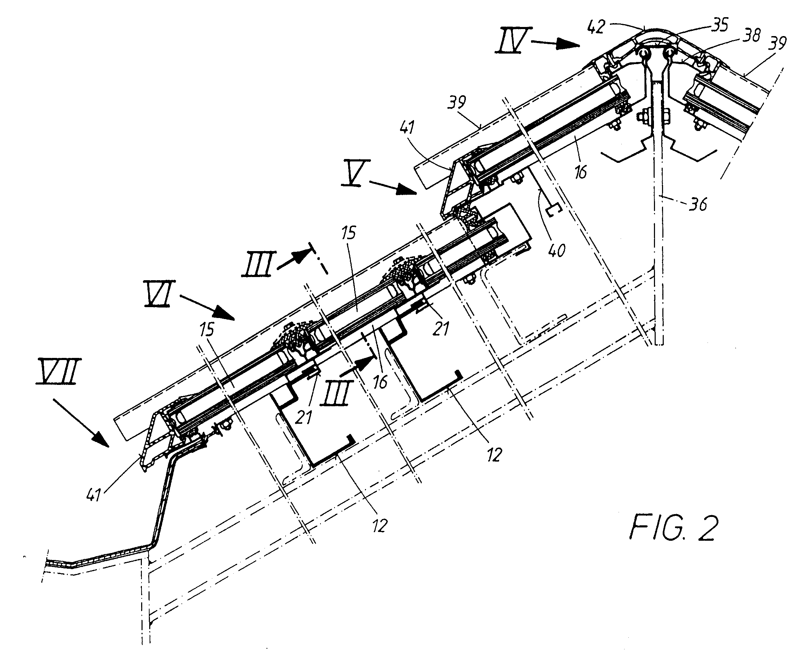

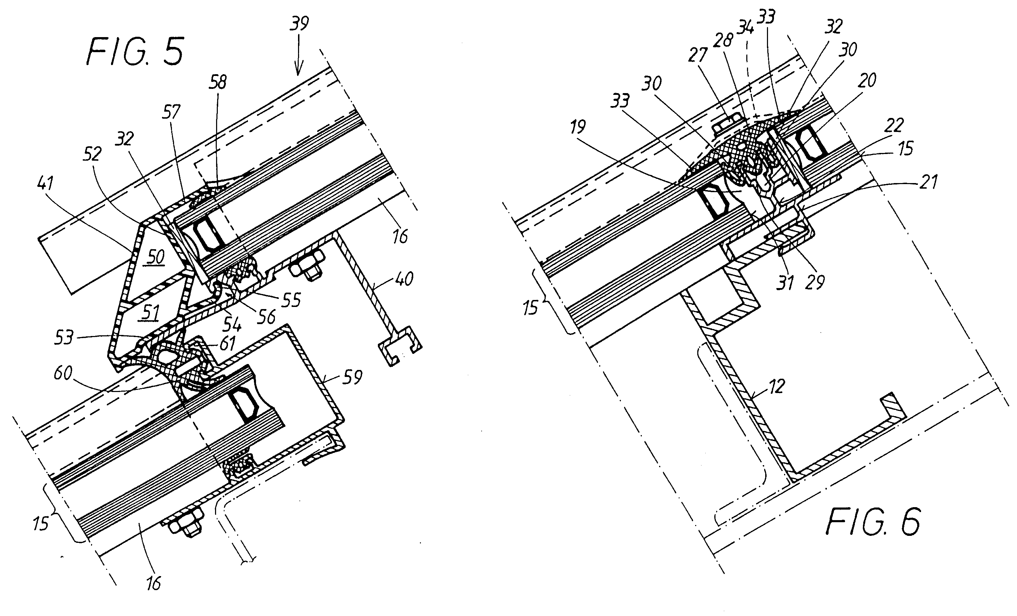

An dem in Fig. 2 in strichpunktierten Linien dargestellten, üblicherweise verwendeten, stählernen Traggerüst sind die Pfetten 12 abstandsweise in bekannter Art festgelegt, an denen quer zur Pfettenlängsrichtung verlaufende Sprossen 16 befestigt sind, die auf den oberen Schenkeln der C-förmigen Pfetten 12 aufliegen und mittels in einer Hammerkopfnut eingesetzten Schrauben 17 mit diesen verbunden sind. Die als Auflage für die Füllungsplatten 15 dienenden Sprossen 16 ragen mit einem Profilsteg 18 in den Stoßzwischenraum 19 zwischen den Füllungsplatten 15 auf, wobei dieser Profilsteg 18 an seinem Oberende eine Schraubnut 20 aufweist. Auf den oberen Schenkel der C-förmigen Pfette 12 ist ein in Längsrichtung der Pfette verlaufendes Stützprofil 21 aufgesteckt (Fig. 6), das ebenfalls mit einem Profilsteg 22 in den Stoßzwischenraum 19 zweier benachbarter Füllungsplatten 15 einragt. In die Schraubnut 20 des Profilsteges 18 der Sprosse 16 ist ein Isolierkörper 23 eingesetzt, der pilzkopfartig gestaltet ist und an dem eine elastische Abdeckleiste 24 verrastet, die mit beiderseitigen Dichtlamellen 25 in Anlage auf der Oberseite der Füllungsplatten 15 ist. Zur Sicherung von Abdeckleiste 24 und Isolierkörper 23 einerseits und zur Andrückung der Dichtlamellen 25 an den Füllungsplatten 15 ist die Abdeckleiste 24 von einem langgestreckten, metallischen Abdeckprofil 26 übergriffen, das zusammen mit dem Isolierkörper 23 und der Abdeckleiste 24 mittels abstandsweise in die Schraubnut 20 eingedrehten Schrauben 26 am Profilsteg 18 der Sprossen 16 festgelegt ist. In die Schraubnut 20 des Profilsteges 22 des Stützprofiles 21 ist eine als Isolierkörper wirkende Scheibenstoßdichtung 28 eingesetzt, die unterseitig eine Spreizleiste 29 besitzt, welche in der Schraubnut 20 des Profilsteges 22 verrastet (Fig. 6). Neben der Spreizleiste sind beiderseits an der leistenartigen Scheibenstoßdichtung 28 Dichtschenkel 30 angeordnet, die gegen die Stirnränder 31 der Füllungsplatten 15 gerichtet sind. Dabei mag die zum First gerichtete Seite des Profilsteges 22 einen Stützschenkel aufweisen, an dem sich über eine Zwischenlage 32 der oberseitige Stirnrand der Füllungsplatte 15 anlegen mag. Oberseitig weist die Scheibenstoßdichtung 28 zwei beiderseits abragende Dichtlamellen 33 auf, die den außenseitigen Randbereich der Füllungsplatten 15 bereichsweise übergreifen. Zur Sicherung der Andrücklage der Dichtlamellen 33 an den Füllungsplatten 15 mag auch die Scheibenstoßdichtung 28 von einem Abdeckprofil 34 übergriffen sein, das zusammen mit der einen Isolierkörper bildenden Scheibenstoßdichtung 28 mittels abstandsweise in die Schraubnut 20 eingedrehter Schrauben 27 festgelegt sein mag.

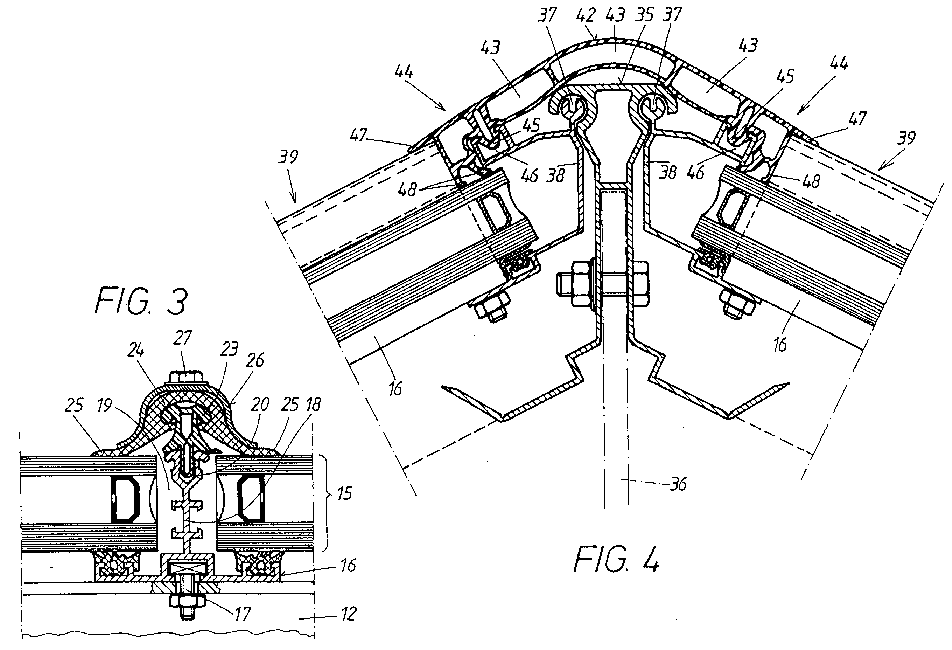

Die insbesondere aus den Fig. 2 und 4 ersichtliche Firstpfette 35 ist mit aufragenden Knotenblechen 36 des nicht näher bezeichneten Stahlgerüstes des Gewächshauses fest verbunden. Am Kopfbereich der Firstpfette 35 weist diese beiderseitige zylindrische Rinnen 37 zur schwenkbaren Aufnahme von Scharnierrahmenprofilen 38 beiderseits des Firstprofiles 35 angeordneter Lüftungsklappen 39 auf. Bei der Lüftungsklappe 39 stützen sich die Füllungsplatten 15 oberseitig im Scharnierrahmenprofil 38 ab, während die Füllungsplatten 15 seitlich von Sprossen 16 umgeben sind, und die Unterseite der Füllungsplatten der Lüftungsklappe 39 auf einem Lüftungsrandprofil 40 aufliegen, das mit einem Glashalteprofil 41 verbunden ist. An den beiderseits der Firstpfette 35 schwenkbar gelagerten Scharnierrahmenprofilen 38 ist eine flexible Abdeckhaube 42 gehaltert, die die Firstpfette 35 übergreift und doppelschalig ausgebildet ist, wobei sich zwischen den Schalen Isolierkammern 43 in Form von Hohlkammern befinden. An den Seitenrändern 44 der Abdeckhaube 42 befinden sich Rasten 45, die in Form von durchlaufenden Leisten oder abstandsweise angeordneten Pilzköpfen ausgebildet sein können und in Nuten 46 des Scharnierrahmenprofiles 38 befestigt sind, so daß eine Verbindung zwischen den beidseitigen Scharnierrahmenprofilen 38 das Firstprofil 35 überdeckend gegeben ist. Außerdem weisen die Seitenränder 44 der Abdeckhaube 42 an ihrer oberen Schale eine die Sprossen 16 überlappende Dichtlamelle 47 auf, während die Seitenränder 44 am unteren Bereich bei dem aus Fig. 4 ersichtlichen Ausführungsbeispiel zwei hintereinander liegende eine Luftkammer zwischen sich einschließende Dichtlippen 48 aufweisen, die auf den Füllungsplatten 15 dichtend anliegen.

Wie bereits erwähnt befindet sich am Unterrand der Lüftungsklappe 39 ein Lüftungsrandprofil 40, an welchem ein Glashalteprofil 41 festgelegt ist. Dieses Glashalteprofil 41 ist auch geeignet am unteren Dachrand der letzten Füllungsplatten 15 eingesetzt zu werden. Während der untere Bereich der Lüftungsklappe 39 ein Lüftungsrandprofil 40 aufweist, an welchem das Glashalteprofil festgelegt ist, liegt am unteren Dachrand die letzte Füllungsplatte auf einem Rinnenrandprofil 49 auf, das ebenfalls zur Halterung des Glashalteprofiles 41 ausgebildet ist. Dieses Glashalteprofil 41 ist als leistenförmiger Bauteil aus einem wärmedämmenden Kunststoff gefertigt und weist bei dem dargestellten Ausführungsbeispiel wenigstens zwei Isolierkammern 50 und 51 auf. Ferner ist das Glashalteprofil 41 mit einem am Stirnrand der Füllungsplatten über eine Zwischenlage 32 abgestützten Anlageschenkel und mit einem rechtwinklig dazu abragenden Stützschenkel 53 versehen, wobei sich der Stützschenkel 53 in einen Klemmschenkel 54 fortsetzt. Dieser Klemmschenkel 54 greift mit einer Halteklaue 55 in eine Stütznut 56 ein, die sowohl am Lüftungsrandprofil 40 als auch am Rinnenrandprofil 49 vorhanden ist. Oberseitig tritt aus dem Glashalteprofil parallel zum Klemmschenkel 54 ein Halteschenkel 57 aus, welcher unter Zwischenschaltung eines Dichtbandes 58 die Füllungsplatte 15 im Randbereich übergreift. Unterhalb des Lüftungsrandprofiles 40 findet die obere Dachfläche ihren Abschluß an einem Lüftungsriegel 59, der an einem Pfettenprofil des Stahlgerüstes festgelegt ist und in welches der obere Rand der oberen Füllungsplatte 15 eingeschoben und über eine Dichtung auf dem unteren Schenkel des U-förmig profilierten Lüftungsriegels 59 aufgelegt ist. Der Lüftungsriegel 59 weist an seinem oberen, die Füllungsplatte 15 übergreifenden Schenkel eine Hammerkopfnut 61 auf, in welcher eine Pfettendichtleiste 60 gehaltert ist. Diese Pfettendichtleiste 60 ist als Hohlkammerprofil gestaltet und weist zwei nach oben aufragende Dichtlippen und drei nach unten abragende Dichtlippen auf. Die oberen Dichtlippen liegen in Schließlage der Lüftungsklappe am Glashalteprofil 41 bzw. am oberen Schenkel des Lüftungsrandprofiles 40 an, während die unteren Dichtlippen schließend an der Füllungsplatte 15 anliegen (Fig. 5). Es sei der Vollständigkeit halber noch erwähnt, daß sowohl das Lüftungsrandprofil 40 als auch der Lüftungsriegel 59 mit den jeweils zugehörigen Sprossen 16 verschraubt ist (Fig. 5).

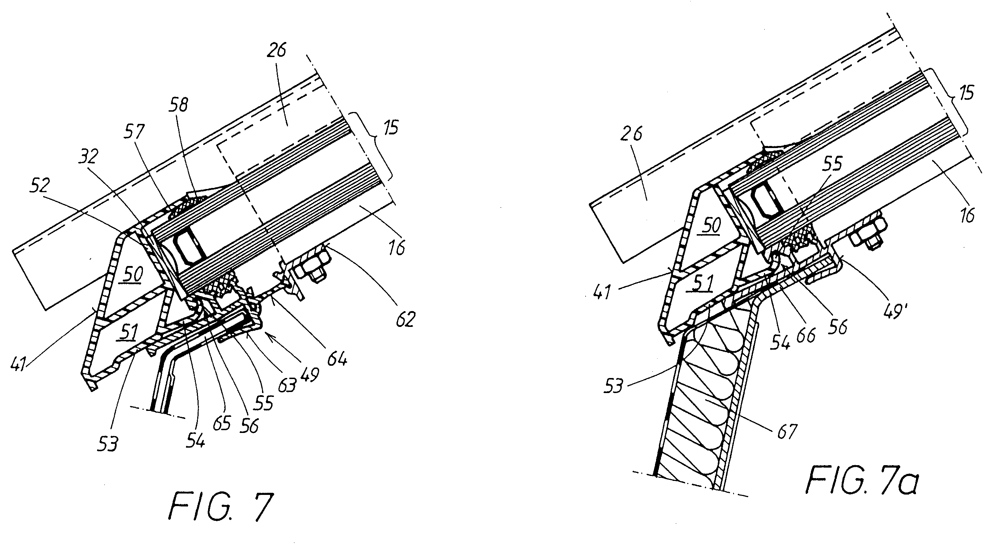

Der in Fig. 7 dargestellte Rinnenrand weist ein mit den zugehörigen Sprossen beispielsweise verschraubtes Rinnenrandprofil 49 auf, das als Verbundprofil ausgebildet ist, dessen eine an den Sprossen 16 festgelegte, metallische Profilleiste 62 mit der anderen, das Glashalteprofil 41 halternden metallischen Profilleiste über einen Isoliersteg 64 verbunden ist. Die Profilleiste 63 weist neben einem Auflageschenkel für die Füllungsplatten 15 eine Einschubleiste auf, die zusammen mit dem Auflageschenkel der stützenden Aufnahme eines Rinnenrandes 65 dient. Der Isoliersteg 64 unterbricht die Wärmebrücke von der Innenseite des Gewächshauses zu dessen Außenseite her, so daß in diesem Bereich ebenfalls eine Wärmedämmung erreicht wird (Fig. 7).

Eine Alternativlösung des Rinnenrandbereiches ist in Fig. 7 A dargestellt. Dort ist das Rinnenrandprofil 49' als einstückige Metalleiste ausgebildet, an die eine Metallrinne 66 angeschlossen ist. Diese Metallrinne 66 weist eine außenseitige, wärmedämmende Auskleidung 67 auf, die unmittelbar an das Glashalteprofil 41 anschließt. Dadurch ist auch bei dieser Alternativlösung gemäß Fig. 7 A eine Wärmedämmung im Rinnenrandbereich gegeben.

### Bezugszeichenliste :

- 10: Stütze
- 11: Riegel
- 12: Pfette
- 13: Firstpfette
- 15: Füllungsplatte
- 16: Sprosse
- 17: Schraube
- 18: Profilsteg
- 19: Stoßzwischenraum
- 20: Schraubnut
- 21: Stützprofil
- 22: Profilsteg
- 23: Isolierkörper
- 24: Abdeckleiste
- 25: Dichtlamelle
- 26: Abdeckprofil
- 27: Schraube
- 28: Scheibenstoßdichtung
- 29: Spreizleiste
- 30: Dichtschenkel
- 31: Stirnränder
- 32: Zwischenlage
- 33: Dichtlamelle
- 34: Abdeckprofil
- 35: Firstpfette
- 36: Knotenblech
- 37: Rinne
- 38: Scharnierrahmenprofil
- 39: Lüftungsklappe
- 40: Lüftungsrandprofil
- 41: Glashalteprofil
- 42: Abdeckhaube
- 43: Isolierkammer/Hohlkammer
- 44: Seitenrand
- 45: Rast
- 46: Nut
- 47: Dichtlamelle
- 48: Dichtlippe
- 49: Rinnenrandprofil
- 49': Rinnenrandprofil
- 50: Isolierkammer
- 51: Isolierkammer
- 52: Anlageschenkel
- 53: Stützschenkel
- 54: Klemmschenkel
- 55: Halteklaue
- 56: Stütznut
- 57: Halteschenkel
- 58: Dichtband
- 59: Lüftungsriegel
- 60: Pfettendichtleiste
- 61: Hammerkopfnut
- 62: Profilleiste
- 63: Profilleiste
- 64: Isoliersteg
- 65: Rinnenrand
- 66: Metallrinne
- 67: Auskleidung

## Patentansprüche

1. Gewächshaus aus von Profilstäben aus Metall, insbesondere aus Aluminium und/oder dessen Legierungen gebildeten Stützen (10), Riegeln (11), Pfetten (12) und Sprossen (16) zusammengesetzten Rahmenteilen, in die unter Zwischenschaltung von Dichtungen Füllungsplatten (15) aus Isolierglasscheiben, durchsichtigen Kunststoff-Doppelplatten oder dergleichen eingesetzt sind, in deren Stoßzwischenraum Profilstege (18, 22) einragen, die einerseits Bestandteil von Sprossen und andererseits Bestandteil von an den Pfetten (12) festgelegten Stützprofilen (21) sind, wobei die Firstpfette (35) ein Scharnierrahmenprofil (38) der Lüftungsklappe (39) schwenkbeweglich haltert und die Lüftungsklappe ein Lüftungsrandprofil (40) aufweist, das mit den Sprossen (16) der Lüftungsklappe verbunden ist, während an der unteren Dachkante die Sprossen (16) mit einem Rinnenrandprofil (49, 49') verbunden sind,
**dadurch gekennzeichnet,**
daß die Profilstege (18, 22) sowohl der Sprossen (16) als auch der Stützprofile (21) Schraubnuten (20) zur Festlegung einer dichtenden Abdeckleiste (24) und/oder eines Isolierkörpers (23, 28) aufweisen,
daß die Firstpfette (35) von einer an den Scharnierrahmenprofilen (38) der Lüftungsklappen (39) festgelegten, Isolierkammern (43) aufweisenden, flexiblen Abdeckhaube (42) übergriffen ist und
daß am Lüftungsrandprofil (40) und am Rinnenrandprofil (49) ein Isolierkammern (50, 51) aufweisendes Glashalteprofil (41) den Randbereich der Füllungsplatte (15) umfassend festgelegt ist.

2. Gewächshaus nach Anspruch 1, dadurch gekennzeichnet, daß in die Schraubnut (20) der Profilstege (18, 22) Isolierkörper (23, 28) eingesetzt sind, die zusammen mit daran verrasteten, elastisch dichtenden Abdeckleisten mittels abstandsweise in die Schraubnuten (20) eingedrehten Schrauben (27) festgelegt sind.

3. Gewächshaus nach Anspruch 2, dadurch gekennzeichnet, daß die Abdeckleiste (24) von einem metallischen Abdeckprofil (26) übergriffen und zusammen mit dem Isolierkörper (23, 28) und der Abdeckleiste (24) mittels den Schrauben (27) am Profilsteg (18, 22) von Sprossen (16) und Stützprofilen (21) festgelegt sind.

4. Gewächshaus nach einem der vorhergehenden Ansprüche, dadurch gekennzeichnet, daß die die Firstpfette (35) übergreifende Abdeckhaube (42) doppelschalig mit mehreren dazwischen angeordneten Hohlkammern (43) ausgebildet ist und an ihren Seitenrändern (44) mit je einer Raste (45) in einer Nut (46) jedes Scharnierrahmenprofiles (38) festgelegt ist.

5. Gewächshaus nach Anspruch 4, dadurch gekennzeichnet, daß die Seitenränder (44) der Abdeckhaube (42) an ihrem oberen Bereich eine die Sprossen (16) überlappende Dichtlamelle (47) aufweisen, wobei die Seitenränder am unteren Bereich mit wenigstens einer Dichtlippe (48) die Füllungsplatte (15) im Verhältnis zum Scharnierrahmenprofil (38) abdichtet.

6. Gewächshaus nach einem der vorhergehenden Ansprüche, dadurch gekennzeichnet, daß die Glashalteprofile (41) als Hohlkammerprofile mit einem am Stirnrand der Füllungsplatten (15) gegebenenfalls über eine Zwischenlage (32) abgestützten Anlageschenkel (52) und einem am Lüftungsrandprofil (40) bzw. am Rinnenrandprofil (49) aufliegenden, rechtwinklig zum Anlageschenkel (52) abragenden Stützschenkel (53) ausgebildet sind, wobei der Stützschenkel (53) sich in einen Klemmschenkel (54) fortsetzt, der mit einer Halteklaue (55) in eine Stütznut (56) des Lüftungsrandprofiles (40) bzw. des Rinnenrandprofiles (49) eingreift und mit einem Halteschenkel (57) unter Zwischenschaltung eines Dichtbandes (58) die Füllungsplatte (15) im Randbereich oberseitig übergreift.

7. Gewächshaus nach einem der vorhergehenden Ansprüche, dadurch gekennzeichnet, daß der Luftspalt zwischen dem Lüftungsrandprofil (40) und dem darunter liegenden Lüftungsriegel (59) des Dachrahmens durch eine am Lüftungsriegel (59) gehalterte Pfettendichtleiste (60) in Schließlage der Lüftungsklappe (39) durch Anlage am Glashalteprofil (41) einerseits und an der darunterliegenden Füllungsplatte (15) andererseits überbrückt ist.

8. Gewächshaus nach einem der vorhergehenden Ansprüche, dadurch gekennzeichnet, daß an den in den Stoßzwischenraum zweier Füllungsplatten (15) einragenden Profilstegen (22) der an den Pfetten (12) gehalterten Stützprofile (21) als Isolierkörper wirkende Scheibenstoßdichtungen (28) gehaltert sind, die mit einer Spreizleiste (29) in der Schraubnut (20) verrasten und mit beiderseitigen Dichtschenkeln (30) gegen die Stirnränder (31) der Füllungsplatten (15) gerichtet sind, während beiderseits abragende Dichtlamellen (33) den Randbereich der Füllungsplatten (15) übergreifen und mittels eines durch eine in die Schraubnut (20) eingedrehte Schraube (27) beaufschlagten Abdeckprofiles (34) gegen die Außenebene der Füllungsplatten angedrückt sind.

9. Gewächshaus nach einem der vorhergehenden Ansprüche, dadurch gekennzeichnet, daß das Rinnenrandprofil (49) als Verbundprofil ausgebildet ist, dessen eine an den Sprossen (16) festgelegte, metallische Profilleiste (62) mit der das Glashalteprofil (41) halternden und den Rinnenrand (65) aufnehmenden, metallischen Profilleiste (63) über einen Isoliersteg (64) miteinander verbunden sind.

10. Gewächshaus nach einem der Ansprüche 1 bis 8, dadurch gekennzeichnet, daß das Rinnenrandprofil (49') als einstückige Metalleiste ausgebildet ist, an die eine Metallrinne (66) mit einer wärmedämmenden, an das Glashalteprofil (41) anschließenden Auskleidung (67) angeschlossen ist.

## Claims

1. A greenhouse comprising frame members composed of shaped bars of metal, in particular uprights (10), horizontal members (11), stringers (12) and mullions (16) formed from aluminium and/or alloys thereof, into which frame members are fitted with the interposition of sealing means filling panels (15) or insulating glass panes, transparent plastic double panes or the like, into the joint space of which project profile flanges (18, 22) which are on the one hand a component of mullions and on the other hand a component of support profiles (21) fixed to the stringers (12), wherein the ridge stringer (35) pivotably movably holds a hinge frame profile (38) of the ventilation flap (39) and the ventilation flap has a ventilation edge profile (40) which is connected to the mullions (16) of the ventilation flap while at the lower edge of the roof the mullions (16) are connected to a gutter edge profile (49, 49'),
characterised in that
the profile flanges (18, 22) both of the mullions (16) and also of the support profiles (21) have screw grooves (20) for fixing a sealing cover strip (24) and/or an insulating body (23, 28),
the ridge stringer (35) has engaging thereover a flexible cover cap (42) which has insulating chambers (43) and which is fixed to the hinge frame profiles (38) of the ventilation flaps (39), and
fixed to the ventilation edge profile (40) and to the gutter edge profile (49) is a glass-holding profile (41) having insulating chambers (50, 51), in such a way as to embrace the edge region of the filling panel (15).

2. A greenhouse according to claim 1 characterised in that fitted into the screw groove (20) of the profile flanges (18, 22) are insulating bodies (23, 28) which, together with elastically sealing cover strips latched thereto are fixed by means of screws (27) which are screwed in spaced relationship into the screw grooves (20).

3. A greenhouse according to claim 2 characterised in that the cover strip (24) has a metal cover profile portion (26) engaging thereover and are fixed together with the insulating body (23, 28) and the cover strip (24) by means of the screws (27) to the profile flange (18, 22) of mullions (16) and support profiles (21).

4. A greenhouse according to one of the preceding claims characterised in that the cover cap (42) which engages over the ridge stringer (35) is of a double-shell configuration with a plurality of hollow chambers (43) arranged therebetween and is fixed at the side edges (44) thereof with a respective retaining portion (45) in a groove (46) in each hinge frame profile (38).

5. A greenhouse according to claim 4 characterised in that the side edges (44) of the cover cap (42) at the upper region thereof have a sealing bar portion (47) which overlaps the mullions (16), wherein the side edges seals off at the lower region with at least one sealing lip (48) the filling panel (15) in relation to the hinge frame profile (38).

6. A greenhouse according to one of the preceding claims characterised in that the glass-holding profiles (41) are in the form of hollow chamber profiles with a contact limb (52) supported at the end edge of the filling panels (15) possibly by way of an intermediate layer (32) and a support limb (53) which bears against the ventilation edge profile (40) or the gutter edge profile (49) respectively and which projects at a right angle to the contact limb (52), wherein the support limb (53) is extended in a clamping limb (54) which engages with a holding claw (55) into a support groove (56) of the ventilation edge profile (40) or the gutter edge profile (49) respectively and engages with a holding limb (57) over the filling panel (15) in the edge region at the top side thereof, with the interposition of a sealing strip (58).

7. A greenhouse according to one of the preceding claims characterised in that the air gap between the ventilation edge profile (40) and the subjacent ventilation bar (59) of the roof frame is bridged over by a stringer sealing strip (60) held on the ventilation bar (59) in the closed position of the ventilation flap (39) by bearing against the glass-holding profile (41) on the one hand and the subjacent filling panel (15) on the other hand.

8. A greenhouse according to one of the preceding claims characterised in that held to the profile flanges (22), which project into the joint space of two filling panels (15), of the support profiles (21) held to the stringers (12) are pane joint seals (28) which act as insulating bodies and which latch with a spreader strip (29) into the screw groove (20) and are directed with sealing limbs (30) on both sides towards the end edges (31) of the filling panels (15) while sealing bar portions (33) which project at both sides engage over the edge region of the filling panels (15) and are pressed against the outside plane of the filling panels by means of a cover profile (34) which is acted upon by a screw (27) which is screwed into the screw groove (20).

9. A greenhouse according to one of the preceding claims characterised in that the gutter edge profile (49) is in the form of a composite profile of which a metal profile strip (62) which is fixed to the mullions (16) are connected together by way of an insulating web portion (64) to the metal profile strip (63) which holds the glass-holding profile (41) and which receives the gutter edge (65).

10. A greenhouse according to one of claims 1 to 8 characterised in that the gutter edge profile (49') is in the form of a one-piece metal strip to which there is connected a metal gutter (66) having a heat-insulating cladding (67) adjoining the glass-holding profile (41).

## Revendications

1. Serre dont les éléments de structure sont constitués de supports (10), traverses (11), pannes (12) et chevrons (16) en profilés métalliques, en particulier en aluminium et/ou ses alliages, dans lesquels des plaques de garnissage (15) en vitrage isolant, des plaques doubles en matière plastique transparente ou équivalentes sont insérées avec intercalation de joints, dans les espaces interstitiels entre les joints desquelles des nervures profilées (18, 22) pénètrent, qui font partie d'une part des chevrons et d'autre part des profilés de support (21) fixés aux pannes (12), la panne faîtière (35) soutenant un profilé de cadre à charnière (38) du clapet de ventilation (39) de manière permettant le basculement et le clapet de ventilation présentant un profilé de bord de ventilation (40) qui est relié aux chevrons (16) du clapet de ventilation, tandis qu'à l'arête inférieure de la toiture les chevrons (16) sont reliés par un profilé de bord de gouttière (49, 49'), caractérisée en ce que les nervures profilées (18, 22) tant des chevrons (16) que également des profilés de support (21) présentent des rainures de vissage (20) pour la fixation d'une latte de recouvrement (24) assurant l'étanchéité et/ou d'un corps isolant (23, 28), en ce que la panne faîtière (35) est partiellement recouverte d'un capot de recouvrement (42) flexible, présentant des chambres d'isolation (43), fixé aux profilés de cadre à charnière (38) des clapets de ventilation (39) et en ce qu'un profilé de maintien de vitrage (41) présentant des chambres d'isolation (50, 51), entourant le bord de la plaque de garnissage (15), est fixé au profilé de bord de ventilation (40) et au profilé de bord de gouttière (49).

2. Serre suivant la revendication 1, caractérisée en ce que des corps isolants (23, 28) sont insérés dans la rainure de vissage (20) des nervures profilées (18, 22), lesquels sont fixés à l'aide de vis (27) serrées à écartement régulier dans les rainures de vissage (20) en même temps que des lattes de recouvrement qui y sont verrouillées et font étanchéité de manière élastique.

3. Serre suivant la revendication 2, caractérisée en ce que la latte de recouvrement (24) est enserrée par un profilé longitudinal de recouvrement métallique (26) et est fixée à l'aide de vis (27) à la nervure profilée (18, 22) des chevrons (16) et des profilés de support (21) en même temps que le corps isolant (23, 28) et la latte de recouvrement (24).

4. Serre suivant l'une des revendications précédentes, caractérisée en ce que le capot de recouvrement (42) recouvrant la panne faîtière (35) est construit à double coque avec plusieurs chambres isolantes (43) disposées entre celles-ci et est fixé sur ses bords latéraux (44) par un taquet (45) chacun dans une rainure (46) de chaque profilé de cadre à charnière (38).

5. Serre suivant la revendication 4, caractérisée en ce que les bords latéraux (44) du capot de recouvrement (42) présentent à leur partie supérieure une lamelle d'étanchéité (47) débordant sur les chevrons (16), les bords latéraux (44) assurant à la partie inférieure à l'aide d'au moins une lèvre d'étanchéité (48) l'étanchéité de la plaque de garnissage (15) par rapport au profilé de cadre à charnière (38).

6. Serre suivant l'une des revendications précédentes, caractérisée en ce que les profilés de maintien de vitrage (41) sont construits comme profilés creux comportant une aile d'appui (52) soutenue par le bord frontal supérieur de la plaque de garnissage (15) avec intercalation d'une couche intermédiaire (32) et d'une aile de soutien (53) reposant sur le profilé de bord de ventilation (40) ou sur le profilé de bord de gouttière (49), dépassant perpendiculairement vers le bas par rapport à l'aile d'appui (52), l'aile de soutien (53) se prolongeant par une aile de serrage (54) qui fait prise avec une griffe de retenue (55) dans une rainure de soutien (56) du profilé de bord de ventilation (40) ou du profilé de bord de gouttière (49) et dont une aile d'arrêt (57) déborde sur le bord de la plaque de garnissage (15) avec intercalation d'une bande d'étanchéité (58).

7. Serre suivant l'une des revendications précédentes, caractérisée en ce que l'espace interstitiel entre le profilé de bord de ventilation (40) et la traverse de ventilation (59) de la charpente de toiture qui se trouve en dessous est, en position de fermeture du clapet de ventilation (39), recouvert d'une latte d'étanchéité de panne (60) retenue par la traverse de ventilation (59) reposant d'une part sur le profilé de maintien de vitrage (41) et d'autre part sur la plaque de garnissage (15) située en dessous.

8. Serre suivant l'une des revendications précédentes, caractérisée en ce que les nervures profilées (22) des profilés de support (21) maintenus par les pannes (12) et pénétrant dans l'espace interstitiel du joint entre deux plaques de garnissage (15) maintiennent des joints pour joint de bout (28) servant de corps d'isolation, lesquels se verrouillent à l'aide d'une latte d'écartement (29) dans la rainure de vissage (20) et sont orientés des deux côtés à l'aide d'ailes d'étanchéité (30) contre les bords frontaux (31) des plaques de garnissage (15), tandis que des lamelles d'étanchéité (33) dépassant des deux côtés vers le bas débordent sur le bord des plaques de garnissage (15) et sont pressées contre le plan extérieur des plaques de garnissage à l'aide d'un profilé de recouvrement (34) fixé par une vis (27) vissée dans la rainure de vissage (20).

9. Serre suivant l'une des revendications précédentes, caractérisée en ce que le profilé de bord de gouttière (49) est construit comme profilé composite, dont une latte métallique profilée (62) fixée aux chevrons (16) est reliée via une nervure isolante (64) à la latte métallique profilée (63) maintenant le profilé de maintien de vitrage (41) et recevant le bord de gouttière (65).

10. Serre suivant l'une des revendications 1 à 8, caractérisée en ce que le profilé de bord de gouttière (49') est construit comme profilé métallique en une pièce, auquel est raccordée une gouttière métallique (66) qui comporte un revêtement extérieur (67) calorifuge se raccordant directement au profilé de maintien de vitrage (41).
